# EUROPEAN PATENT SPECIFICATION

(11) **EP 1 513 785 B1**
(45) Date of publication and mention of the grant of the patent: **03.03.2010**
(21) Application number: 03760219.0
(22) Date of filing: 21.05.2003
(51) Int. Cl.: C06D 5/06

(54) **Gas generating composition**
Gaserzeugende Zusammensetzung
Composition génératrice de gaz

(30) Priority: 14.06.2002 US 172166
(43) Date of publication of application: 16.03.2005
(73) Proprietor: AUTOLIV ASP, INC., Ogden, Utah 84405-1563 (US)
(72) Inventor: MENDENHALL, Ivan, V., Providence, UT 84332 (US); SMITH, Robert, G., North Ogden, UT 84414 (US)
(74) Representative: Bankes, Stephen Charles Digby
(86) International application number: PCT/US2003/015893
(87) International publication number: WO 2003/106378

(56) References cited:
- WO-A-00/06524
- WO-A-97/46501
- WO-A-98/06486
- US-A- 6 077 372

## Description

### BACKGROUND OF THE INVENTION

This invention relates generally to gas generant compositions and, more particularly, to gas generant compositions particularly suited for use in micro-gas generator devices such as for seat belt pretensioning as well as devices, systems and methods of gas generation using or employing such gas generant compositions.

Various safety restraint systems for the protection of vehicle occupants have come into widespread use. In such systems, a restraint device is typically actuated upon the occurrence of a condition during which a vehicle occupant is to be restrained. As will be appreciated, a vehicle collision is an example of a common occurrence for which restraint of a vehicle occupant is customarily desired.

A common type or form of vehicular actuatable occupant restraint system has or includes a seat belt which is extendable across the vehicle occupant and includes an actuatable device, such as a pretensioner, provided to move at least a portion of the seat belt relative to the occupant. For example, one modem seat belt is known as a 3-point restraint because it is secured to the vehicle at three points arranged about the vehicle occupant to provide a diagonal torso section and a horizontal lap portion to hold the vehicle occupant in the seat. The belt is customarily attached to the vehicle by a spring-loaded retractor tending to tighten the belt, and by a buckle for quick release of the belt. Seat belt pretensioners are typically sited at the retractor or at the buckle end of the restraining seat belt. Seat belt pretensioners are commonly designed to store energy which, when released, effects the pretensioning operation. This energy may be mechanical energy such as in the form of a stressed spring but, more commonly, modem pretensioners are typically pyrotechnically operated. Pyrotechnically-operated pretensioners commonly comprise a sealed tube containing a gas generant composition which reacts rapidly to generate gas and rapidly expand to provide the energy to effect the pretensioning operation. For example, such generated gas may be used to drive a piston or the like, such as included or used in a pretensioner, in association with a seat belt or other restraint device. In view of the relatively small amount of gas generated or produced from, in or by such devices, as compared to gas generating inflators typically used in the inflation of inflatable restraint system airbag cushions, such devices are commonly referred to as "micro-gas generators."

Micro-gas generators are generally composed of a single housing which contains an initiation element such as in the form of squib, an intermediate igniter composition and a high output, gas generating material. Squibs used in such devices typically include a heated bridgewire to which has been applied a thermally sensitive very hot burning initiator composition, however, other known initiation elements can, if desired be used. Thus, micro-gas generators are typically very small devices which generally contain components corresponding to those contained in an airbag inflator, including an initiation element, an igniter composition and a high output, gas generating material, but without the degree of physical separation typically present in airbag inflators. Further, due to the very small operating time requirements associated with micro-gas generator applications (such as operating times of about 6 milliseconds or less), such devices generally contain a much larger ratio of igniter material to gas generating material, as compared to typical airbag inflator devices. For example, inflators used in association with the inflation of frontal impact airbag cushions employed for driver protection typically contain or include igniter material in a range of about 3-10% by weight of the total gas producing material (e.g., igniter material and gas generating output charge) present in the inflator device. In contrast, in micro-gas generators, the igniter material may generally be present within the device in a relative amount of at least about 20% by weight of the total gas producing material present therewithin and typically in a range of about 20-50% by weight of the total gas producing material present in the device.

Gas generant compositions commonly utilized in the inflation of automotive inflatable restraint airbag cushions have previously most typically employed or been based on sodium azide. Such sodium azide-based compositions, upon initiation, normally produce or form nitrogen gas. While the use of sodium azide and certain other azide-based gas generant materials meets current industry specifications, guidelines and standards, such use may involve or raise potential concerns such as involving the safe and effective handling, supply and disposal of such gas generant materials.

Certain economic and design considerations have also resulted in a need and desire for alternatives to azide-based pyrotechnics and related gas generants. For example, interest in minimizing or at least reducing the overall space requirements for inflatable restraint systems and particularly such requirements related to the inflator component of such systems has stimulated a quest for gas generant materials which provide relatively higher gas yields per unit volume as compared to typical or usual azide-based gas generants. Further, automotive and airbag industry competition has generally lead to a desire for gas generant compositions which satisfy one or more conditions such as being composed of or utilizing less costly ingredients or materials and being amenable to processing via more efficient or less costly gas generant processing techniques.

As a result, the development and use of other suitable gas generant materials has been pursued. In particular, such efforts have been directed to the development of azide-free gas generants for use in such inflator device applications. In view of the above, there is a need and a desire for an azide-free gas generant material that, while overcoming at least some of the potential problems or shortcomings of azide-based gas generants, may also provide relatively high gas yields, such as compared to typical azide-based gas generants. In particular, relatively low cost gas generant material solutions to one or more such problems or limitations are desired.

As will be appreciated, a desirable feature of micro-gas generator devices used in or in connection with seat belt pretensioning is the production of a relatively large quantity of gas from a relatively small volume. In addition, it is desirable that such gas generator devices minimize or avoid the production of substantial amounts of possibly undesirable effluent gases such as carbon monoxide and nitrogen-containing oxides such as in the form of NOₓ, e.g., NO and NO₂, for example, and which undesirable effluent gases might somehow escape into the vehicle interior and thus come into contact with the occupant(s).

Gas generant materials and compositions, such as disclosed in the above-identified related applications, now U.S. Patent 6,103,030; U.S. Patent 6,083,331; and U.S. Patent 6,224,697, can generally provide a combination of high flame temperature (c.a. 2100 K) and gas output (e.g., gas outputs of about 3.3 moles per 100 grams of material) such as required or desired for use in micro-gas generators such as for seat belt pretensioning. However, such gas generant materials commonly require the inclusion of an auxiliary pyrotechnic material, e.g., an igniter material, in order to satisfy one or more performance requirements, such as for operation at low temperatures, e.g., temperatures down to -40°C, if such materials are to be used in such operations. Unfortunately, the requirement for inclusion of an igniter material, such as in a granulated form, can complicate system design and operation while also undesirably increasing the costs associated therewith. For example, since gas generant material particles are typically relatively large as compared to igniter material particles, the packaging together of igniter material and gas generant material particles commonly results in igniter material particles migrating to the bottom of the bed of gas generant material and away from the squib. Consequently, such devices may experience undesirable erratic and/or variable ignition as, for example, the amount of igniter material migrating and/or the extent of migration of the igniter material may vary from device to device. In view thereof, it is common to separately contain the igniter material in close proximity to or with the squib such that, upon actuation, the igniter material is routinely rapidly and completely ignited and provides sufficient energy to uniformly ignite the gas generant material. Unfortunately, satisfaction of the need to maintain separation of the igniter material and the main body of gas generant material while the device is in a pre-actuation state, typically requires the inclusion of an additional part of component in the device. As will be appreciated, inclusion of such an additional component may undesirably increase one or more of the weight, size and cost of the device.

WO 98/06486 discloses gas generant compositions comprising 30 to 90 wt.% metal ammine nitrate, 0 to 40 wt.% guanidine nitrate, 10 to 60 wt.% of a co-oxidizer that may be ammonium nitrate and/or potassium perchlorate and a cool burning organic nitrogen compound, together with an unspecified amount of a slag formation additive and/or burn rate enhancing additive.

WO 97/46501 describes gas generant compositions comprising 50 to 75 wt.% guanidine nitrate and 20 to 50 wt.% potassium perchlorate.

US-A-6,077,372 describes a gas generant composition comprising 35 to 50 wt.% guanidine nitrate, 30 to 55 wt.% copper diammine dinitrate oxidizer, 2 to 10 wt.% burn rate and slag formation additive and 0 to 25 wt.% ammonium nitrate.

WO 00/06524 discloses and claims gas generant compositions comprising 35 to 60 wt.% guanidine nitrate, 3 to 12 wt.% copper diammine nitrate, 5 to 15 wt.% of a ballistic modifier and 30 to 60 Wt.% ammonium nitrate.

Thus, there is a need and a demand for improvements in gas generant compositions particularly suited for use in micro-gas generator devices such as for seat belt pretensioning as well as corresponding or associated improved gas generation devices, systems and methods. In this regard, there is a particular need and demand for such gas generant compositions and corresponding or associated improved gas generation devices, systems and methods, which, in addition to satisfying requirements for such micro-gas generator application such as relating a flame temperature and gas output, also desirably avoid a need or requirement for the presence or inclusion of an auxiliary pyrotechnic compound, such as an igniter, in order to meet performance requirements such as relating to low temperature operation, where low temperature operation generally refers to operation at temperatures below ambient, e.g., 25°C, to as low as about -40°C, for example. Further, there is a need and a demand for improvements in gas generant compositions particularly suited for use in micro-gas generator devices and which gas generant compositions desirably produce or result in gaseous effluents having a suitably reduced or lower content of undesired effluent gases such as carbon monoxide and NOₓ, for example.

The prior art generally fails to provide a gas generant composition which, in addition to satisfying performance requirements relating to application in micro-gas generators, such as relating to flame temperature and gas output, also desirably avoids a need or requirement for the presence or inclusion of an auxiliary pyrotechnic compound, such as an igniter, in order to meet performance requirements such as relating to low temperature operation (e.g., operation at temperatures down to -40°C). The prior art inclusion of an igniter auxiliary pyrotechnic compound has generally resulted in the inclusion of an additional part or compound in corresponding gas generator devices and such as may undesirably increase one or more of the weight, size or cost of the such devices. Further, the prior art has generally failed to provide such gas generant compositions which produce or result in gaseous effluents having a suitably reduced or lower contents of undesired effluent gases such as carbon monoxide and nitric oxide and as may be desired for particular applications, such as including in micro-gas generators used in seat belt pretensioning.

The present invention provides a gas generant composition comprising:
between 25 and 60 composition weight percent non-azide nitrogen-containing gas generating fuel;
between 10 and 55 composition weight percent metal ammine nitrate oxidizer;
optionally up to 50 composition weight percent ammonium nitrate supplemental oxidizer component;
between 2 and 10 composition weight percent metal oxide burn rate enhancing and slag formation additive; and
between 1 and 20 composition weight percent potassium perchlorate as an additive for improving the ignitability of the gas generant composition at -40°C as compared to a similar composition without the potassium perchlorate, sufficiently to avoid the need for the presence or inclusion of a charge of igniter material within or in association with a micro-gas generant vehicle occupant restraint device.

In accordance with preferred embodiment of the invention the gas generant composition which contains or includes: between 25 and 60 composition weight percent guanidine nitrate, between 10 and 55 composition weight percent copper diammine dinitrate, optionally up to 50 composition weight percent ammonium nitrate supplemental oxidizer component, between 2 and 10 composition weight percent metal oxide burn rate enhancing and slag formation additive selected from SiO₂ A1₂O₃ and mixtures thereof, and between 1 and 20 composition weight percent potassium perchlorate.

The invention still further comprehends a seat belt pretensioner containing a gas generant composition as defined above.

The invention also yet still further comprehends a method of generating gas suitable for use in an occupant restraint system of a motor vehicle using a gas generant composition as defined above. In accordance with a preferred embodiment of the invention, such method involves directly igniting a reactant material including a fuel component containing between 25 and 60 composition weight percent of a non-azide nitrogen-containing gas generating fuel between 10 and 55 composition weight percent metal ammine nitrate oxidizer, optionally up to 50 composition weight percent ammonium nitrate supplemental oxidizer component, between 2 and 10 composition weight percent metal oxide burn rate enhancing and slag formation additive, and between 1 and 20 composition weight percent potassium perchlorate.

Other objects and advantages will be apparent to those skilled in the art from the following detailed description taken in conjunction with the appended claims and drawings.

### BRIEF DESCRIPTION OF THE DRAWINGS

FIG. 1 is a simplified schematic, in a partially broken away view, of a micro-gas generator device in accordance with one embodiment of the invention.
FIG. 2 is a graphical depiction of tank pressure as a function of time performance realized in Comparative Example 1 and Example 1.

### DETAILED DESCRIPTION OF THE INVENTION

The present invention provides a gas generant material used in pressure activated restraint system devices such as micro-gas generator applications such as seat belt pretensioners.

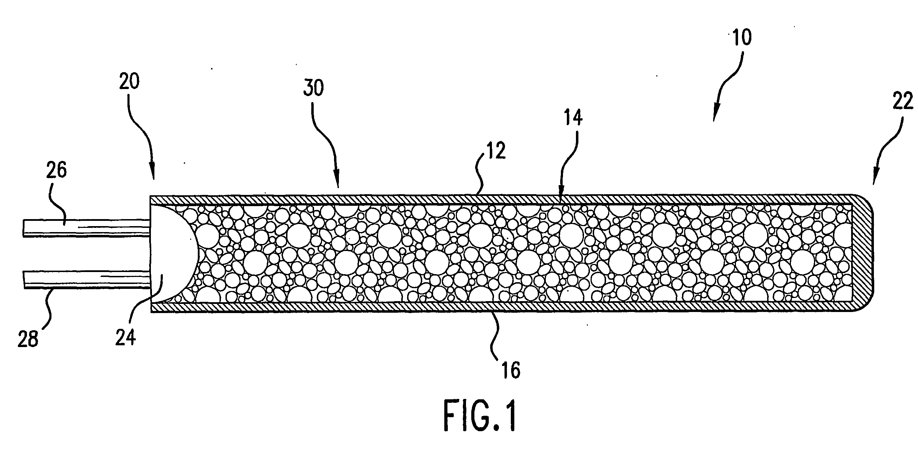

Turning to FIG. 1, there is illustrated an occupant restraint system device, having the form of a micro-gas generator device, generally designated by the reference numeral 10, in accordance with one preferred embodiment ofthe invention. In particular, the micro-gas generator 10 is shown as having the general form of a device such as may find desirable application in the driving of a piston or the like such as may be desired in a seat belt pretensioner or like apparatus.

The micro-gas generator 10 includes a housing 12 forming a chamber 14. The housing 12 is at least in part defined by an elongated generally cylindrical sleeve 16, having an open first end 20 and a closed second end 22 and may desirably be formed in a one piece construction. As will be appreciated, such a construction desirably may serve to reduce or eliminate the number of welds needed or used in the construction such as by eliminating the need for the welding of an end closure such to close one or more ends of the housing 12.

An initiator, generally designated by the reference numeral 24, such as in the form of a heated bridgewire squib is suitably joined or otherwise connected to the sleeve first end 20 and such as to close such first end. The initiator 24 includes or has two electrode pins 26 and 28. The electrode pins 26 and 28 are in signal receiving communication with one or more sensors (not shown) such as known in the art and such as effective to send a signal to the initiator 24 to effect the desired actuation thereof.

As will be appreciated by those skilled in the art and guided by the teachings herein provided, other suitable forms of initiator devices, such as known in the art, can if desired be used in the practice of the invention. For example, such other suitable forms of initiator devices can include spark-discharge, heated or exploding wire or foil and through bulkhead initiators, and may, if desired, optionally contain a desired load of a suitable pyrotechnic charge. Thus, it is to be understood that the broader practice of the invention is not necessarily limited to the incorporation and/or use of a heated bridgewire squib.

The housing 12 contains or otherwise includes a supply of gas generant composition, generally designated by the reference numeral 30. As described in greater detail below and in accordance with a preferred embodiment, the invention desirably employs a gas generant composition which, in addition to satisfying the stringent demands relating to materials employed in micro-gas generators such as in the form of seat belt pretensioners, also does the following:
a) avoids the need for the inclusion of an auxiliary pyrotechnic compound, e.g., an igniter, in order for the device to meet or otherwise appropriately satisfy performance requirements, such as for operation at low temperatures, e.g., operation at temperatures below ambient, e.g., 25°C, to as low as about -40°C, for example, and desirably also
b) produces or results in gaseous effluents having a suitably reduced or lower contents of undesired effluent gases such as carbon monoxide and NOₓ, for example.

Gas generant compositions in general accord with the invention include a fuel component, an oxidizer component, a burn rate enhancing and slag formation additive and potassium perchlorate gas generant additive. More particulary, preferred gas generant compositions in accordance with the invention include or contain between 25 and about 60 composition weight percent of a non-azide nitrogen-containing gas generating fuel, between 10 and about 55 composition weight percent ofa metal ammine nitrate oxidizer, between 0 and about 50 composition weight percent ammonium nitrate supplemental oxidizer component, between 2 and about 10 composition weight percent of a metal oxide burn rate enhancing and slag formation additive, and between 1 and about 20 composition weight percent potassium perchlorate.

As identified above, preferred fuel materials for use in the practice of the invention are non-azide in nature. Groups or categories of fuels useful in the practice of the invention include various nitrogen-containing organic fuel materials and tetrazole complexes of at least one transition metal. Specific examples of nitrogen-containing organic fuel materials useful in the practice of the invention include guanidine nitrate, aminoguanidine nitrate, triaminoguanidine nitrate, nitroguanidine, dicyandiamide, triazalone, nitrotriazalone, tetrazoles and mixtures thereof. Tetrazole complexes of transition metals such as copper, cobalt, and possibly zinc, for example, can be used. As will be appreciated, the gas generating fuel component of particular gas generant compositions in accordance with the invention may be comprised of individual such fuel materials or combinations thereof.

In addition, the fuel component of the subject gas generating material may, if desired, include a metallic fuel material. Specific examples of metallic fuels useful in the practice of the invention include silicon, aluminum, boron, magnesium, alloys of aluminum and magnesium and combinations thereof.

The fuel component of the subject gas generating material, in accordance with certain particularly preferred embodiments of the invention, includes the fuel materials guanidine nitrate or guanidine nitrate in combination with one or more metallic fuels of silicon, aluminum, boron, alloys of aluminum and magnesium alloys and combinations thereof. As will be appreciated, such metallic fuels may desirably be utilized in a powder form such as to facilitate mixing and combination with other composition components. While the inclusion of such metallic fuels can serve various purposes, in general such metallic fuels may desirably be included in such compositions to increase the combustion temperature of the resulting composition.

In practice, guanidine nitrate is a generallyparticularly preferred fuel due to one or more various factors including: having a relatively low commercial cost; generally avoiding undesired complexing with copper or other transition metals which may also be present; is itself relatively highly oxygenated and thus may serve to minimize or reduce the amount of externally provided oxidant required for combustion. When included, the powders of silicon, aluminum, boron, alloys of aluminum and magnesium alloys and combinations thereof may generally desirably be present in an amount of up to about 5 weight percent of the total gas generant composition.

In accordance with certain preferred embodiments of the invention, between about 10 and about 55 weight percent of the subject gas generant composition constitutes a metal ammine nitrate oxidizer. Preferred metal ammine nitrate oxidizer materials for use in the practice of the invention include copper diammine dinitrate, zinc diammine dinitrate and combinations thereof, with copper diammine dinitrate being particularly preferred.

The subject gas generant compositions additionally desirably contain between about 2 and about 10 composition weight percent of such metal oxide burn rate enhancing and slag formation additive. Examples of particular metal oxide burn rate enhancing and slag formation additives useful in the practice of the invention include silicon dioxide, aluminum oxide, titanium dioxide, boron oxide and combinations thereof In general, silicon dioxide, aluminum oxide and combinations thereof are preferred metal oxide additives for use in the practice of the invention. The use of the metal oxide is as a burn rate enhancer and for the purpose of producing slag which is easily filtered from the gas stream of an airbag inflator. The incorporation and use of such silicon and aluminum oxide materials are particularly effective in facilitating the production of a slag material which is relatively easily filtered from the gas stream of an airbag inflator.

In the practice ofthe invention, it is believed that the combination of such metal oxide component and the relatively high levels of metal amine nitrate present in the composition taken together are responsible for the high burning rate and the low burning rate pressure exponent of the compositions.

Preferred gas generant compositions in accordance with the invention include or contain between 1 and about 20 composition weight percent potassium perchlorate. In certain particularly preferred gas generant compositions of the invention potassium perchlorate is present in an amount of between 4 and 10 composition weight percent. In particular, advantages attendant the gas generant composition presence or inclusion of potassium perchlorate in accordance with the invention generally become more pronounced and more significant wherein potassium perchlorate is present in an amount of at least 4 composition weight percent. Further, the gas generant composition inclusion of potassium perchlorate in an amount of more than 10 composition weight percent may undesirably reduce the gas yield resulting from reaction of the composition.

Those skilled in the art and guided by the teachings herein provided will appreciate that potassium perchlorate is desirably compatible with other ingredients of the composition. That is, there is generally no undesired chemical reaction between potassium perchlorate and other composition components under normal service conditions (e.g., temperatures of ≤ 107°C) until such time as combustion is initiated. More particularly, for example, the potassium perchlorate is desirably anhydrous in form as hydrated materials can undesirably react with composition materials such as the metal ammine nitrate oxidizer at elevated temperatures (e.g., temperatures greater than 25°C), and thus result in undesirable degradation.

The presence or inclusion of such potassium perchlorate in the gas generant compositions of the invention has been found to provide or result in a gas generant composition of sufficiently improved ignitability at -40°C, as compared to a similar composition without the potassium perchlorate gas generant additive, such as to avoid the need for the presence or inclusion of a charge of igniter material within or in association with the micro-gas generator occupant restraint system device 10. That is, gas generant compositions in accordance with the invention are directly ignitable (e.g., ignitable without the aid of an intermediary igniter material, even at such low temperatures. As will be appreciated by those skilled in the art and guided by the teachings herein provided, elimination of the need for the presence of inclusion of an igniter material can result in significant and substantial simplification of the design and manufacture of devices containing such gas generant composition as well as reducing the cost of manufacture and production of such devices.

Further, the presence or inclusion of such potassium perchlorate in the gas generant compositions of the invention has also been found to desirably improve the quality of the gas effluent resulting from the reaction thereof, as compared to the gas effluent produced or formed upon combustion of a similar composition without potassium perchlorate. More particularly, the potassium perchlorate additive-containing gas generant compositions of the invention have been found to produce or result in a gas effluent having a lesser relative amount of either or both carbon monoxide and one or more NOₓ materials, as compared to the gas effluent produced or resulting from the combustion of a similar composition without the potassium perchlorate gas generant additive.

One particularly preferred gas generant composition in accordance with the invention includes:
between 25 and 60 composition weight percent guanidine nitrate,
between 10 and 55 composition weight percent copper diammine dinitrate,
between 2 and 10 composition weight percent metal oxide burn rate enhancing and slag formation additive selected from the group consisting of SiO₂, Al₂O₃ and mixtures thereof, and
between 1 and 20, preferably between 4 and 10, composition weight percent potassium perchlorate gas generant additive.

The initiator 24 and the supply of gas generant composition 30 are situated such that upon actuation, the initiator 24 and the supply of gas generant composition 30 are in reaction-initiating communication such that actuation of the initiator 24 results or otherwise produces reaction of at least a portion of the supply of the gas generant composition 30. In the particular illustrated embodiment, the initiator 24 and the supply of gas generant composition 30 are in direct contact.

While the supply of gas generant material 30 is shown as being in the form of a granular material, it is to be understood that the broader practice of the invention is not necessarily limited to the incorporation and use of particular or specific forms of the gas generant material. Thus, other suitable forms of gas generant materials including, for example, tablets, grains and wafers, may be used if desired.

### Operation

Typical operation of the micro-gas generator 10, shown in FIG.1, is as follows:

Upon the sensing of an occurrence for which actuation of the micro-gas generator 10 is desired, an electrical signal is sent to the initiator 24. The initiator 24 functions to ignite the supply of gas generant material 30 such as to result in the ignition thereof and the formation of a product gas. In those applications where, for example, the micro-gas generator 10 is a seat belt pretensioner, such product gas can be employed to drive a piston to appropriately tighten the seat belt. The product gas may then be appropriately vented from such piston assembly, such as into the passenger compartment of the vehicle and such as known in the art.

As will be appreciated by those skilled in the art and guided by the teachings herein provided, gas generant compositions in accordance with the invention can be processed or otherwise produced by various methods. One useful processing technique for gas generant compositions in accordance with the invention is to simply dry blend the desired relative amount of potassium perchlorate with the balance of the desired gas generant material composition. Alternatively, the desired relative amount of potassium perchlorate can be incorporated in the gas generant composition as an added ingredient during spray dry processing of the formulation such as described in the above-identified related prior U.S. patent applications, now U.S. Patent 6,103,030; U.S. Patent 6,083,331; and U.S. Patent 6,224,697, for example.

The present invention is described in further detail in connection with the following examples which illustrate or simulate various aspects involved in the practice of the invention.

### EXAMPLES

### Comparative Example 1 and Example 1

In each of these tests, a test gas generator device composed of an assembly such as shown in FIG. 1 and containing the respective gas generant formulation shown in TABLE 1, below, at a temperature of -40°C, was deployed into a 10 cubic centimeter closed bomb test tank equipped with a pressure transducer and a high speed data collection system. The pressure in the test tank was recorded as a function of time and plotted to show a relative comparison of the gas generant compositions.

| **TABLE 1 - GAS GENERANT COMPOSITION (wt. %)** | | |
|---|---|---|
| | Comparative Example 1 | Example 1 |
| guanidine nitrate | 42.95 | 54.72 |
| copper diammine dinitrate | 51.95 | 34.49 |
| silicon dioxide | 5.10 | 4.79 |
| potassium perchlorate | -- | 6.00 |

The baseline gas generant composition used in Comparative Example 1 was a balanced formulation wherein the amount of fuel and oxidizer have been adjusted to theoretically result, upon combustion, in only carbon dioxide, water and nitrogen gas. The formulation of Example 1 was slightly fuel rich for the purpose of satisfying customer specifications for gas effluent concentrations but identical performance results were obtained with a balanced formulation containing the same amount of potassium perchlorate.

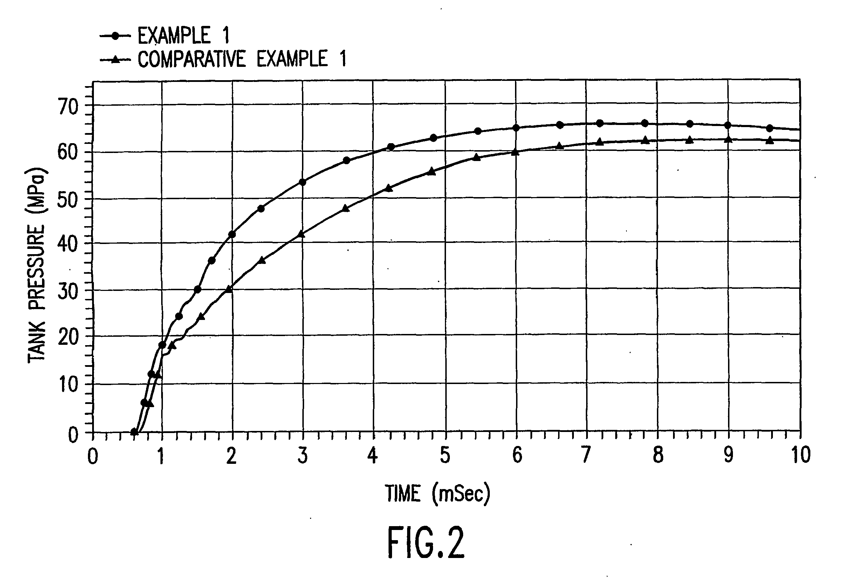

FIG. 2 is a graphical depiction of tank pressure as a function of time for each of the test inflators of Comparative Example 1 and Example 1.

### Discussion of Results

As shown in FIG. 2, the gas generant composition of Example 1 (containing potassium perchlorate in accordance with the invention) burned faster early in the combustion trace and also reached maximum pressure sooner than the baseline formulation of Comparative Example 1. In particular, the formulation containing the potassium perchlorate gas generant additive satisfied performance specifications of automakers while the baseline formulation did not. Thus, the presence or inclusion of the additive of the invention has been shown as desirably useful to increase gas generant material performance to meet automaker specifications.

### Comparative Example 2 and Example 2

In these tests, a heavyweight test hardware fixture containing a 32 gram load ofthe respective balanced gas generant compositions shown in TABLE 2, below was fired into a 60 liter tank, with the gas effluents therein measured by FTIR. The results are shown in TABLE 3, below.

In the composition of Example 2, the potassium perchlorate was dry blended into a spray dried formulation containing the other ingredients.

| **TABLE 2** | | |
|---|---|---|
| | Comparative Example 2 | Example 2 |
| Composition (wt.%) | | |
| guanidine nitrate | 42.95 | 45.63 |
| copper diammine dinitrate | 51.95 | 45.48 |
| silicon dioxide | 5.10 | 4.89 |
| potassium perchlorate | -- | 4.00 |
| Equivalence Ratio | 1.00 | 1.00 |

| **TABLE 3** | | | |
|---|---|---|---|
| TEST | EFFLUENT (ppm) | | |
| | CO | NO | NO₂ |
| Comparative Example 2 | 6730 | 9903 | 1849 |
| Example 2 | 2717 | 3525 | 342 |

### Discussion of Results

Both compositions were formulated to only produce carbon dioxide, water and nitrogen gas upon combustion. The combustion temperatures for both compositions were similar enough to each other to rule out a temperature effect on effluent concentrations.

As shown in TABLE 3, the potassium perchlorate-containing gas generant composition of Example 2 and in accordance with the invention exhibited, upon combustion, a reduction in both those effluent species which are fuel-rich (e.g., carbon monoxide) and those effluent species which are oxygen-rich (e.g., NOₓ).

Thus, the invention provides an improved gas generant composition particularly suited for use in micro-gas generator devices such as for seat belt pretensioning as well as corresponding or associated improved gas generation devices, systems and methods. In particular, the gas generant compositions of the invention, in addition to satisfying requirements for applications such as in micro-gas generator occupant restraint system devices such as seat belt pretensioners, such as requirements relating to flame temperature and gas output, are directly ignitable that is they avoid a need or requirement for the presence or inclusion of an auxiliary pyrotechnic compound, such as an igniter, in order to meet performance requirements such as relating to low temperature operation (e.g., operation at temperatures below ambient, e.g., 25°C, to as low as about -40°C, for example). Further, the invention generally provides such gas generant compositions which desirably produce or result in gaseous effluents having a suitably reduced or lower contents of undesired effluent gases such as carbon monoxide and NOₓ, for example, as compared to similar compositions but which lack the potassium perchlorate gas generant additive of the invention.

The invention has been described above with reference to particular embodiments wherein the gas generant composition of the invention is employed within a micro-gas generator occupant restraint system device. It is to be understood, however, that such gas generant compositions of the invention can, if desired, be utilized or employed in other suitable or appropriate occupant restraint system devices, as will be apparent to those skilled in the art and guided by the teachings herein provided.

## Claims

1. A gas generant composition comprising:
between 25 and 60 composition weight percent non-azide nitrogen-containing gas generating fuel;
between 10 and 55 composition weight percent metal ammine nitrate oxidizer;
optionally up to 50 composition weight percent ammonium nitrate supplemental oxidizer component;
between 2 and 10 composition weight percent metal oxide burn rate enhancing and slag formation additive; and
between 1 and 20 composition weight percent potassium perchlorate as an additive for improving the ignitability of the gas generant composition at -40°C as compared to a similar composition without the potassium perchlorate, sufficiently to avoid the need for the presence or inclusion of a charge of igniter material within or in association with a micro-gas generant vehicle occupant restraint device.

2. The gas generant composition of claim 1 which, upon combustion, produces a gas effluent having a lesser relative amount of NOₓ as compared to a gas effluent upon combustion of a similar composition without the potassium perchlorate gas generant additive.

3. The gas generant composition of claim 1 or claim 2 which, upon combustion, produces a gas effluent having a lesser relative amount of carbon monoxide as compared to a gas effluent upon combustion of a similar composition without the potassium perchlorate gas generant additive.

4. The gas generant composition of any preceding claim wherein the non-azide nitrogen-containing gas generating fuel comprises guanidine nitrate.

5. The gas generant composition of any preceding claim wherein the metal ammine nitrate oxidizer comprises copper diammine dinitrate.

6. The gas generant composition of any preceding claim wherein the metal oxide burn rate enhancing and slag formation additive is SiO₂, Al₂O₃ or a mixture thereof.

7. The gas generant composition of any preceding claim wherein the potassium perchlorate gas generant additive is present in an amount of between 4 and 10 composition weight percent.

8. A seat belt pretensioner containing the gas generant composition of any preceding claim.

9. An occupant restraint system device containing the gas generant composition of any preceding claim.

10. A method of generating gas suitable for use in an occupant restraint system of a motor vehicle, said method comprising:
directly igniting a reactant material comprising a gas generant composition according to any one of claims 1 to 7.

## Patentansprüche

1. Gaserzeugungszusammensetzung, umfassend:
25-60 Gew.-% der Zusammensetzung eines keinen Azidstickstoff enthaltenden, gaserzeugenden Brennstoffes;
10-55 Gew.-% der Zusammensetzung eines Metallamminnitrat-Oxidationsmittels;
gegebenenfalls bis zu 50 Gew.-% der Zusammensetzung Ammoniumnitrat als zusätzliche Oxidationsmittelkomponente;
2-10 Gew.-% der Zusammensetzung eines Metalloxid-Additivs zur Erhöhung der Brenngeschwindigkeit und zur Schlackenbildung; und
1-20 Gew.-% der Zusammensetzung an Kaliumperchlorat als Additiv zur Verbesserung der Entzündbarkeit der Gaserzeugungszusammensetzung bei -40 °C, verglichen mit einer ähnlichen Zusammensetzung ohne Kaliumperchlorat, in ausreichender Menge, um die Notwendigkeit des Vorliegens oder des Zusatzes einer Menge eines Zündmaterials innerhalb oder in Verbindung mit einer Mikro-Gaserzeugungsvorrichtung eines Fahrzeuginsassen-Rückhaltesystems zu vermeiden.

2. Gaserzeugungszusammensetzung nach Anspruch 1, die bei der Verbrennung einen Gasstrom erzeugt, der einen geringeren relativen Anteil an NOₓ aufweist, verglichen mit einem Gasstrom, der bei Verbrennung einer ähnlichen Zusammensetzung ohne das Kaliumperchlorat-Gaserzeugungsadditiv entsteht.

3. Gaserzeugungszusammensetzung nach Anspruch 1 oder 2, die bei Verbrennung einen Gasstrom erzeugt, der einen geringeren relativen Anteil an Kohlenmonoxid aufweist, verglichen mit einem Gasstrom, der bei Verbrennung einer ähnlichen Zusammensetzung ohne das Kaliumperchlorat-Gaserzeugungsadditiv entsteht.

4. Gaserzeugungszusammensetzung nach einem der vorstehenden Ansprüche, wobei der keinen Azidstickstoff enthaltende Gaserzeugungsbrennstoff Guanidinnitrat umfasst.

5. Gaserzeugungszusammensetzung nach einem der vorstehenden Ansprüche, wobei das Metallamminnitrat-Oxidationsmittel Kupferdiammindinitrat umfasst.

6. Gaserzeugungszusammensetzung nach einem der vorstehenden Ansprüche, wobei es sich beim Metalloxid-Additiv zur Erhöhung der Brenngeschwindigkeit und der Schlackenbildung um SiO₂, Al₂O₃ oder ein Gemisch davon handelt.

7. Gaserzeugungszusammensetzung nach einem der vorstehenden Ansprüche, wobei das Kaliumperchlorat-Gaserzeugungsadditiv in einer Menge von 4-10 Gew.-% der Zusammensetzung vorliegt.

8. Gurtstraffer, enthaltend die Gaserzeugungszusammensetzung nach einem der vorstehenden Ansprüche.

9. Fahrzeuginsassen-Rückhaltesystem, enthaltend die Gaserzeugungszusammensetzung nach einem der vorstehenden Ansprüche.

10. Verfahren zur Erzeugung eines Gases, das sich zur Verwendung in einem Fahrzeuginsassen-Rückhaltesystem eines Kraftfahrzeugs eignet, wobei das Verfahren folgendes umfasst:
direktes Entzünden eines Reaktionsmaterials, das eine Gaserzeugungszusammensetzung nach einem der Ansprüche 1 bis 7 umfasst.

## Revendications

1. Composition génératrice de gaz comprenant :
de 25 à 60 % en poids de la composition de combustible générateur de gaz contenant de l'azote non-azide ;
de 10 à 50 % en poids de la composition d'oxydant de nitrate d'amine métallique ;
éventuellement jusqu'à 50 % en poids de la composition de constituant d'oxydant supplémentaire de nitrate d'ammonium ;
de 2 à 10 % en poids de la composition d'additif promouvant la vitesse de combustion d'oxyde métallique et de formation de scories ; et
de 1 à 20 % en poids de la composition de perchlorate de potassium comme additif pour améliorer l'inflammabilité de la composition génératrice de gaz à -40°C en comparaison avec une composition similaire sans perchlorate de potassium, suffisamment pour éviter le besoin de la présence ou de l'inclusion d'une charge d'un matériau d'allumage à l'intérieur ou en association avec un dispositif de retenue d'un occupant de véhicule générateur de micro-gaz.

2. Composition génératrice de gaz selon la revendication 1, laquelle produit, lors de la combustion, un effluent gazeux présentant une quantité relative moindre de NOₓ en comparaison avec un effluent gazeux lors de la combustion d'une composition similaire sans l'additif générateur de gaz de perchlorate de potassium.

3. Composition génératrice de gaz selon la revendication 1 ou la revendication 2, laquelle produit, lors de la combustion, un effluent gazeux présentant une quantité relative moindre de monoxyde de carbone en comparaison avec un effluent gazeux lors de la combustion d'une composition similaire sans l'additif générateur de gaz de perchlorate de potassium.

4. Composition génératrice de gaz selon l'une quelconque des revendications précédentes, dans laquelle le combustible générateur de gaz contenant de l'azote non-azide comprend du nitrate de guanidine.

5. Composition génératrice de gaz selon l'une quelconque des revendications précédentes, dans laquelle l'oxydant de nitrate d'amine métallique comprend du dinitrate de diamine de cuivre.

6. Composition génératrice de gaz selon l'une quelconque des revendications précédentes, dans laquelle l'additif promouvant la vitesse de combustion d'oxyde métallique et de formation de scories est SiO₂, Al₂O₃ ou un mélange de ceux-ci.

7. Composition génératrice de gaz selon l'une quelconque des revendications précédentes, dans laquelle l'additif générateur de gaz de perchlorate de potassium est présent dans une quantité de 4 à 10 % en poids de la composition.

8. Dispositif de prétension de ceinture de sécurité contenant la composition génératrice de gaz selon l'une quelconque des revendications précédentes.

9. Dispositif de système de retenue d'un occupant contenant la composition génératrice de gaz selon l'une quelconque des revendications précédentes.

10. Procédé de génération de gaz utilisable dans un système de retenue d'un occupant d'un véhicule motorisé, ledit procédé comprenant :
l'allumage direct d'un matériau de corps réagissant comprenant une composition génératrice de gaz selon l'une quelconque des revendications 1 à 7.
